**Europäisches Patentamt**

**European Patent Office**

**Office européen des brevets**

(19)

(11) Veröffentlichungsnummer: **0 000 195**
**B1**

(12) **EUROPÄISCHE PATENTSCHRIFT**

(45) Veröffentlichungstag der Patentschrift: **21.04.82**

(51) Int. Cl.³: **C 05 F 7/00**

(21) Anmeldenummer: **78100246.4**

(22) Anmeldetag: **27.06.78**

(54) **Verfahren zur Behandlung von Schlämmen oder Aschen, insbesondere von Klärschlamm oder Klärschlammaschen.**

(30) Priorität: **29.06.77 DE 2729277**

(43) Veröffentlichungstag der Anmeldung:
**10.01.79 Patentblatt 79/1**

(45) Bekanntmachung des Hinweises auf die Patenterteilung:
**21.04.82 Patentblatt 82/16**

(84) Benannte Vertragsstaaten:
**BE CH FR LU NL**

(56) Entgegenhaltungen:
FR - A - 1 264 788
FR - A - 2 187 707
FR - A - 2 237 127
FR - A - 2 260 549
FR - A - 2 338 902
GB - A - 150 375
US - A - 2 139 419
US - A - 2 655 883

(73) Patentinhaber: **Saarberg-Fernwärme GmbH**
**Sulzbachstrasse 26**
**D-6600 Saarbrücken (DE)**

(73) Patentinhaber: **Thomasphosphatfabriken GmbH**
**Schadowstrasse 42**
**D-4000 Düsseldorf (DE)**

(72) Erfinder: **Huck, Horst, Dr.-Ing.**
**Nelkenstrasse 5**
**D-6600 Saarbrücken (DE)**
Erfinder: **Munk, Harald, Dr. Dipl. Landwirt**
**Veilchenweg 8**
**D-5268 Heiligenhaus-Giessenbügel (DE)**

Verfahren zur Behandlung von Schlämmen oder Aschen, insbesondere von Klärschlamm oder Klärschlammaschen

Die Erfindung betrifft ein Verfahren zum Aufschließen von Schlämmen oder Aschen, insbesondere von Klärschlämmen oder Klärschlammaschen mit einem Anteil an nicht aufgeschlossenen mineralischen Düngemittelkomponenten, insbesondere an unlöslichen Phosphatverbindungen, für Düngezwecke.

Industrielle oder kommunale Abwässer werden in Kläranlagen üblicherweise durch einen Sandfang geleitet, welcher grobe Teile, Sand, Quarz und $SiO_2$-enthaltende Substanzen weitgehend abscheidet. Die Abwässer werden nach dem Belebtschlammverfahren weiterbehandelt und enthalten dann nur noch geringe Mengen von $SiO_2$. Es fällt als Endprodukt ein ausgefaulter Klärschlamm an, der in der Regel entweder verbrannt, eingedickt oder zusammen mit Hausmüll kompostiert wird. Die Wirksamkeit dieser Klärschlämme oder Klärschlammaschen für Düngezwecke wird dadurch beeinträchtigt, daß die in ihnen enthaltenen mineralischen Düngemittelkomponenten, insbesondere die durch Fällungsmittel ausgefällten Phosphatverbindungen, wie Eisen-, Aluminium- oder Kalziumphosphate, aufgrund ihrer Unlöslichkeit für die Pflanzen als Düngemittel nicht voll verfügbar sind, d.h. die Pflanzenwurzeln sind nur unvollkommen in der Lage, diese nicht aufgeschlossenen Phosphatsalze aufzunehmen.

Aus der FR - A - 2 237 127 ist es bekannt, aus Flüssen, Häfen und Sedimentationsteichen gewonnenen, hauptsächlich aus $SiO_2$ bestehenden Schlamm zu trocknen, das getrocknete Schlammpulver zwecks Schmelzpunkterniedrigung mit einem Natriumsalz oder Kalksalz zu mischen, die Mischung auf 1 200°C oder darüber zu erhitzen und die geschmolzene Masse in Wasser zu einem nichtstaubenden, glasartigen, wasserunlöslichen Granulat erstarren zu lassen. Dieses bekannte Verfahren wandelt Schlämme durch Zumischung der genannten Zuschlagstoffe vor einem Schmelzprozeß in eine wasser- und säureunlösliche Glas- oder Wasserglasmasse um, die sich in Granulat- oder Blockform für den Straßenbau, nicht aber für Düngezwecke eignet.

Der Erfindung liegt die Aufgabe zugrunde, ein Verfahren zu entwickeln, welches es ermöglicht, die in Klärschlämmen oder Klärschlammaschen vorhandenen unlöslichen Phosphatsalze aufzuschließen und dadurch aus den genannten Produkten hochwertige Düngemittel zu erzeugen.

Diese Aufgabe wird erfindungsgemäß dadurch gelöst, daß die Schlämme oder Aschen, insbesondere die Klärschlämme oder Klärschlammaschen, in Gegenwart einer oder mehrerer der Verbindungen $Na_2CO_3$, CaO, $Ca(OH)_2$, MgO und/oder $MgSO_4$ einer Hochtemperaturbehandlung bis zu 1 200°C unterzogen werden, wobei die schwerlöslichen Phosphate in gut wasser- und/oder zitronensäurelösliche (= pflanzenverfügbare) Phosphatverbindungen umgewandelt werden.

Durch die erfindungsgemäße Behandlung des Klärschlammes oder der Klärschlammasche mit einer Verbindung der vorgenannten Art, welche mit den für die Pflanzenwurzeln night verfügbaren Düngemittelkomponenten im Zuge einer Hochtemperaturbehandlung chemisch derart reagiert, daß wasser- und/oder zitronensäurelösliche Substanzen entstehen, welche nunmehr für die Pflanzen als Düngemittel verfügbar sind, gelingt es, aus wenig wertvollem Klärschlamm oder wenig wertvoller Klärschlammasche einen hochwertigen Dünger zu erzeugen.

Im Hinblick auf die im Klärschlamm enthaltenen Phosphatverbindungen, wie z.B. die Eisen-, Calcium- und Aluminiumphosphate, läßt sich bei der Verwendung von $Na_2CO_3$ als Aufschlußmittel aus den schlecht pflanzenverfügbaren Eisen-, Calcium- und Aluminiumphosphaten das pflanzenverfügbare $CaNaPO_4$ gewinnen. Bei Verwendung von Magnesiumsalzen entsteht das gut pflanzenverfügbare $Mg_3(PO_4)_2$, während bei Verwendung von CaO gut pflanzenverfügbare Calciumsilicophosphate entstehen, da die Klärschlämme bzw. deren Aschen Restmengen an feinkörnigem $SiO_2$ enthalten können.

Die Menge der zuzusetzenden Aufschlußmittel schwankt stark in Abhängigkeit von der Zusammensetzung des Klärschlammes bzw. der Klärschlammasche und liegt in der Regel zwischen 5 und 40%, bezogen auf die Gesamtmenge der Mischung, wie die später angeführten Beispiele zeigen.

Gemäß dem Verfahren nach der Erfindung kann sowohl Klärschlamm als auch Klärschlammasche der Hochtemperaturbehandlung in Gegenwart von den Zuschlagstoffen $Na_2CO_3$, CaO, $Ca(OH)_2$, MgO und/oder $MgSO_4$ zugeführt werden. Hierbei ist unter Klärschlammasche sowohl der bei der Klärschlammverbrennung als auch der bei Klärschlammvergasung zur Erzeugung eines Brenngases anfallende feste Rückstand zu verstehen. Die Behandlung der Klärschlammasche kann in der Schmelze, vorzugsweise in einem sogenannten Schmelzkammerofen erfolgen, wobei der Stoffaustausch in der Schmelze höher ist als in der festen Phase, was zu einer Verkürzung der Reaktionszeiten führt.

Es hat sich gezeigt, daß der Wirkungsgrad des Verfahrens nach der Erfindung am größten ist bei Reaktionstemperaturen zwischen 600 und 1 200°C, vorzugsweise bei 900°C.

Die Hochtemperaturbehandlung des Klärschlammes oder der Klärschlammasche kann auch in anderen Öfen, beispielsweise in Drehtrommelöfen, Drehrohröfen, Muffelöfen oder Wirbelschichtöfen durchgeführt werden.

Als besonders wirkungsvoll erweist sich dabei die Behandlung des Klärschlammes oder der Klärschlammasche in einem Wirbelschichtofen, in dem alle Reaktionspartner in einem stark turbulenten Bewegungszust and gehalten werden. Sowohl der Stoff- als auch der Wärmeübergang zwischen den Reaktionspartnern ist somit groß, so daß mit relativ kurzen Verweilzeiten (etwa 2—20 sec.) gefahren werden kann.

Eine weitere Ausgestaltung des Verfahrens besteht darin, die zu behandelnde Klärschlammasche unter Zumischung von Aufschlußmitteln zu brikettieren und die Briketts zur Hochtemperaturbehandlung mit heißen Eisenhüttenschlacken zu vermengen. Dabei dient die heiße Schlacke als Wärmelieferant für die chemische Umsetzung im Brikett zwischen Schlammasche und beispielsweise Soda. Der Wärmeinhalt der Schlacke wird auf die Briketts übertragen, so daß in vorteilhafter Weise auf die Zufuhr von Fremdwärme verzichtet werden kann. Je nach dem Wärmeverlust der Schlakke, der zum Beispiel durch Abstrahlung bedingt ist, können mittels 1 t Schlacke bis zu 0,7—0,8 t Aschebriketts auf eine Temperatur von etwa 800°C gebracht werden. Das erkaltete Produkt wird anschließend vermahlen.

Durch diese Verfahrensvariante lassen sich somit zwei umweltrelevante Abfallstoffe mit Hilfe von bisher ungenutzter und daher verlorener Wärmeenergie in hohem Maße zu nutzbaren, für die Landwirtschaft wertvollen Düngemitteln vereinigen.

Für die Zugabe von den Aufschlußmittel $Na_2CO_3$, CaO, $Ca(OH)_2$, MgO und/oder $MgSO_4$ zu dem zu behandelnden Klärschlamm bieten sich mehrere Möglichkeiten an:

Das Aufschlußmittel kann, falls es wasserunlöslich ist, bereits im Zuge der Reinigung der Abwässer zugegeben werden; es kann aber auch erst später dem bereits eingedickten bzw. ausgeflockten oder thermisch konditionierten Klärschlamm zugemischt werden, oder es wird unmittelbar in die Hochtemperaturbehandlungszone eingeführt. Bei Kläranlagen, die bereits mit einer Verbrennungsanlage für den anfallenden Klärschlamm ausgerüstet sind, erweist es sich als zweckmäßig, das Aufschlußmittel zusätzlich in die Verbrennungsanlage einzuführen und somit die Aufschließung der nicht pflanzenverfügbaren Phosphate an Ort und Stelle durchzuführen. In diesem Falle ist der zusätzliche Investitionsaufwand zur Durchführung des erfindungsgemäßen Verfahrens besonders gering.

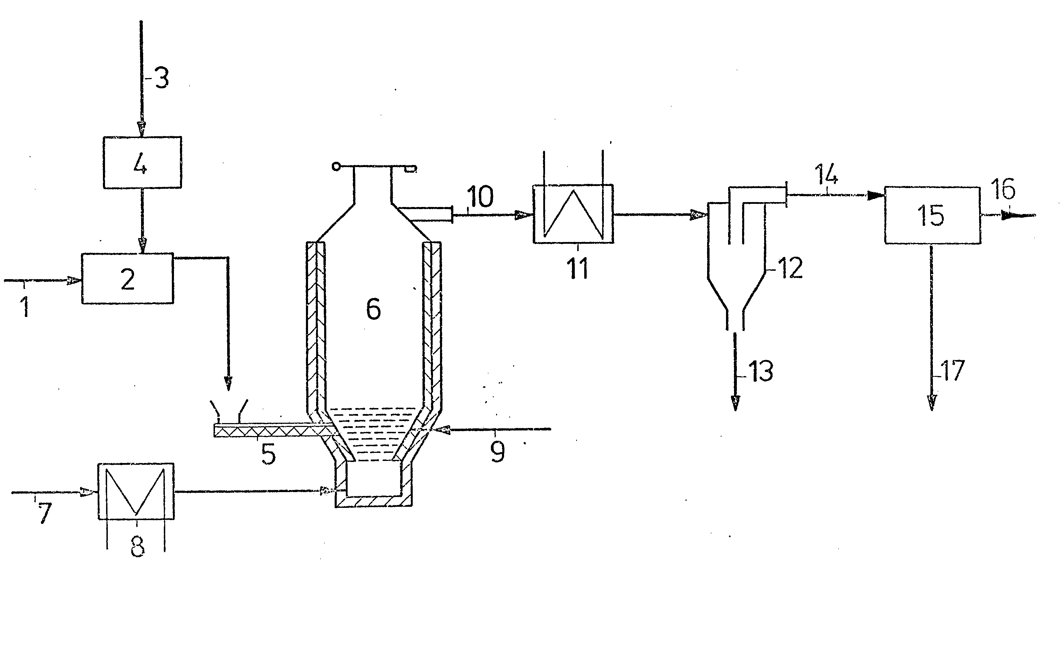

Nachfolgend wird die Erfindung anhand von Ausführungsbeispielen und einer Zeichnung näher erläutert. Es zeigen
— die Beispiele 1—6 mit verschiedenen Aufschlußmitteln durchgeführte Versuche. Dabei ist die angegebene Löslichkeit sowohl der unbehandelten als auch der aufgeschlossenen Klärschlammasche in 2%iger Zitronensäure (pH=3,4) ein Maß für die Pflanzenverfügbarkeit der gewonnen Düngemittel,
— die Tabelle 1 das Ergebnis zweier Vegetationsversuche,
— die Figur ein schematisch dargestelltes Ausführungsbeispiel einer bevorzugten Verfahrensvariante zur Durchführung des erfindungsgemäßen Verfahrens.

## Beispiel 1

85 Teile Klärschlammasche (Löslichkeit in 2%iger Zitronensäure=0,5%) werden mit 15 Teilen Kieserit ($MgSO_4$) innig vermischt und in einem Drehrohrofen bei 1 200°C behandelt. Es resultiert eine Aufschlußmasse, die bei einem Gehalt von 21,5% $P_2O_5$ eine relative Löslichkeit in Zitronensäure von 71% aufweist.

## Beispiel 2

71 Teile Asche werden mit 29 Teilen CaO innig vermischt und in einem Muffelofen bei 1 200°C behandelt. Es resultiert eine Aufschlußmasse, die bei einem Gehalt von 16,1% $P_2O_5$ eine relative Löslichkeit in Zitronensäure von 87% aufweist.

## Beispiel 3

82 Teile Asche werden mit 18 Teilen Soda innig vermischt und in einem Drehrohrofen bei 900°C behandelt. Es resultiert eine Aufschlußmasse, die bei einem Gehalt von 19,8% $P_2O_5$ eine relative Löslichkeit in Zitronensäure von 95% aufweist.

## Beispiel 4

80 Teile Asche werden mit 16 Teilen Soda und 4 Teilen CaO innig vermischt und bei 950°C behandelt. Es resultiert eine Aufschlußmasse, die bei einem Gehalt von 18,9% $P_2O_5$ eine relative Löslich-keit in Zitronensäure von 92% aufweist.

## Beispiel 5

50 Teile Klärschlamm mit einem Wassergehalt von 50% und einem $P_2O_5$-Gehalt in der Trocken-masse von 7,3% werden mit 1,8 Teilen Soda innig vermischt und bei steigender Temperatur bis 950°C verbrannt. Es resultiert eine chemisch aufgeschlossene Masse, die bei einem Gehalt von 18,7% $P_2O_5$ eine relative Löslichkeit in Zitronensäure von 73% aufweist.

## Beispiel 6

Eine Mischung aus 80 Teilen Asche und 20 Teilen Soda wird zu Briketts geformt und im Verhältnis 25% Briketts + 75% LD-Schlacke in heißer LD-Schlacke eingebettet und 2 Stunden gelagert. Es resultiert eine aufgeschlossene Brikettmischung mit einem Gehalt von 19,1% $P_2O_5$ bei 100% relativer

Löslichkeit in Zitronensäure. Die gemeinsame Vermahlung von LD-Schlacke und hochtemperaturbehandelten Briketts ergab einen Gehalt von 9,2% $P_2O_5$ bei einer relativen Löslichkeit von 78%. Die LD-Schlacke allein zeigte einen Gehalt von 3,7% $P_2O_5$ bei einer relativen Löslichkeit von nur 46%.

In der Tabelle 1 ist als Beispiel für den Erfolg des erfindungsgemäßen Verfahrens des Ergebnis zweier Vegetationsversuche dargestellt. Hieraus geht hervor, daß eine mit Soda aufgeschlossene Klärschlammasche die gleiche Pflanzenwirksamkeit entfaltet wie dans Standarddüngemittel Thomasphosphat.

In der Figur ist beispielhaft eine schematisch dargestellte Anlage zur Durchführung des erfindungsgemäßen Aufschlußverfahrens dargestellt. Hierbei wird Klärschlamm beliebiger Herkunft, der mineralische, für Pflanzen nicht verfügbare Düngemittelkomponenten, wie z.B. Eisen-, Aluminium- und Calciumphosphate enthält, über eine Leitung 1 der Anlage zugeführt und in einer Mischanlage 2 intensiv mit geeigneten Aufschlußmittel, wie z.B. $Na_2CO_3$ oder MgO, welche über eine Leitung 3 und eine Dosiervorrichtung 4 dem Mischbehälter zugeleitet werden, vermischt. Daraufhin wird die Mischung aus Klärschlamm und Aufschlußmittel mittels einer Förderschnecke 5 in einen Wirbelschichtofen 6 gefördert und dort bei einer Temperatur von etwa 900°C verbrannt. Die Verbrennungsluft wird dem Wirbelschichtofen 6 über eine Leitung 7 und einen Vorerhitzer 8 und der erforderliche Brennstoff, z.B. Gas oder Öl, über eine Leitung 9 zugeleitet.

Durch die Zugabe der genannten Aufschlußmittel zu dem Klärschlamm findet im Zuge der Verbrennung des Schlammes gleichzeitig eine chemische Umwandlung der im Klärschlamm enthaltenen unlöslichen Phosphatverbindungen in wasser- und/oder zitronensäurelösliche Phosphatverbindungen statt, die nunmehr für Pflanzenwurzeln aufnehmbar sind und sich somit in besonderem Maße als Dungemittel eignen.

Die im Wirbelschichtofen 6 anfallenden Reaktionsprodukte wie Abgas, Sand und Asche werden über eine Leitung 10 abgezogen, in einem Wärmetauscher 11 oder durch Luftzumischung abgekühlt und dann in einem Zyklonabscheider 12 einer Grobzerlegung unterzogen. Die hierbei abgetrennten Feststoffe, im wesentlichen Sand und Asche, werden über eine Leitung 13 aus dem Zyklonabscheider 12 abgeleitet, während das noch geringfügig verunreinigte Abgas über eine Leitung 14 einem Filter 15 zugeführt und in diesem einer Feinreinigung unterzogen wird. Das gereinigte Abgas verläßt das Filter 15 über eine Leitung 16, während die im Filter 15 abgetrennte Feinasche über eine Leitung 17 abgezogen wird.

Die im Zyklonabscheider 12 sowie im Filter 15 anfallenden Aschen können nach entsprechender Aufmahlung als hochwertige Düngemittel weiterverwendet werden.

**0 000 195**

TABELLE 1

Phosphatwirkung von thermisch aufgeschlossener Klärschlammasche

| | $g\ P_2O_5$ Gesamt | Gesamtertrag in g Tr.M./Gefäß Hafer+So.-Blumen | Gesamtentzug in mg $P_2O_5$/Gefäß |
|---|---|---|---|
| **Lehmboden Bredeney** | | | |
| pH 5,5 | | | |
| ohne Phosphat | — | 58,6 | 228,1 |
| Thomasphosphat | 0,3 | 96,6 | 350,9 |
| (Standard) | 0,6 | 111,4 | 394,9 |
| Vers.Charge 81/76 | 0,3 | 97,9 | 387,8 |
| 85 T Asche + 15 T Soda | 0,6 | 106,5 | 410,5 |
| **Sandboden** | | | |
| pH | | | |
| ohne Phosphat | — | 49,4 | 128,7 |
| Thomasphosphat | 0,3 | 68,9 | 189,6 |
| (Standard) | 0,6 | 93,3 | 277,1 |
| Vers.Charge 81/76 | 0,3 | 72,9 | 181,0 |
| 85 T Asche + 15 T Soda | 0,6 | 89,4 | 245,2 |

**Patentansprüche**

1. Verfahren zum Aufschließen von Schlämmen oder Aschen, insbesondere von Klärschlämmen oder Klärschlammaschen mit einem Anteil an nicht aufgeschlossenen mineralischen Düngemittelkomponenten, insbesondere an unlöslichen Phosphatverbindungen, für Düngezwecke, dadurch gekennzeichnet, daß die Schlämme oder Aschen, insbesondere die Klärschlamme oder Klärschlammaschen, in Gegenwart einer oder mehrerer der Verbindungen $Na_2CO_3$, CaO, $Ca(OH)_2$, MgO und $MgSO_4$ einer Hochtemperaturbehandlung bis zu 1 200°C unterzogen werden, wobei die schwerlöslichen Phosphate in gut wasser- und/oder zitronensäurelösliche (= pflanzenverfügbare) Phosphatverbindungen umgewandelt werden.

2. Verfahren nach Anspruch 1, dadurch gekennzeichnet, daß die Hochtemperaturbehandlung bei Temperaturen zwischen 600 und 1 200°C, insbesondere bei einer Temperatur von 900°C, durchgeführt wird.

3. Verfahren nach Anspruch 1 und 2, dadurch gekennzeichnet, daß die schlechtlöslichen Eisen-, Calcium- und Aluminiumphosphate durch die Hochtemperaturbehandlung und die Zugabe von Kalk in pflanzenverfügbares $CaNaPO_4$ umgewandelt werden.

4. Verfahren nach Anspruch 1 und 2, dadurch gekennzeichnet, daß durch Zugabe von MgO und/oder $MgSO_4$ die schwerlöslichen Phosphate bei der Hochtemperaturbehandlung in gut pflanzenverfügbares $Mg_3(PO_4)_2$ umgewandelt werden.

5. Verfahren nach Anspruch 1 und 2, dadurch gekennzeichnet, daß durch Zugabe von CaO und/oder $Ca(OH)_2$ unter Mitwirkung von im Schlamm bzw. Klärschlamm enthaltenen Sandresten gut pflanzenverfügbare Calciumsilicophosphate entstehen.

6. Verfahren nach einem der Ansprüche 1 bis 5, dadurch gekennzeichnet, daß das $Na_2CO_3$, CaO, $Ca(OH)_2$, MgO und/oder $MgSO_4$ dem Schlamm oder der Asche, insbesondere dem Klärschlamm oder der Klärschlammasche, bereits vor oder während der Hochtemperaturbehandlung zugegeben werden.

7. Verfahren nach einem der Ansprüche 1 bis 6, dadurch gekennzeichnet, daß die Hochtempera-

5

turbehandlung in einem Drehtrommel-, Drehrohr- oder Etagenofen erfolgt.

8. Verfahren nach einem der Ansprüche 1 bis 6, dadurch gekennzeichnet, daß die Hochtemperaturbehandlung in einem Wirbelschichtofen erfolgt.

9. Verfahren nach einem der Ansprüche 1 bis 6, dadurch gekennzeichnet, daß die Hochtemperaturbehandlung in einem Muffel- oder Schmelzkammerofen erfolgt, daß die Klärschlammasche geschmolzen wird und deren Behandlung mit den Natrium-, Calcium- und/oder Magnesiumverbindungen in der Schmelze erfolgt.

10. Verfahren nach Anspruch 1 oder 6, dadurch gekennzeichnet, daß die Klärschlammasche und das $Na_2CO_3$, CaO, $Ca(OH)_2$, MgO und/oder $MgSO_4$ brikettiert und die Briketts durch Einmischen in heiße Eisenhüttenschlacke der Hochtemperaturbehandlung ausgesetzt werden.

**Claims**

1. A process for the decomposition of sludges or ashes, in particular clarifying sludges or clarifying sludge ash having a proportion of undecomposed mineral fertilizer components, in particular insoluble phosphate compounds, for fertilizer purposes, characterised in that the sludges or ashes, in particular the clarifying sludges or clarifying sludge ash, are treated at a high temperature up to 1200°C, in the presence of one or more of the compounds $Na_2CO_3$, CaO, $Ca(OH)_2$, MgO and $MgSO_4$, whereby the difficultly-soluble phosphates are converted into phosphate compounds which are highly soluble in water and/or citric acid and which are usable by plants.

2. A process as claimed in Claim 1, characterised in that the high temperature treatment is carried out at temperatures of between 600 and 1200°C, in particular at a temperature of 900°C.

3. A process as claimed in Claim 1 and 2, characterised in that the difficultly-soluble iron phosphates, calcium phosphates and aluminium phosphates are converted by the high temperature treatment and the addition of lime into $CaNaPO_4$, which is usable by plants.

4. A process as claimed in Claim 1 and 2, characterised in that by the addition of MgO and/or $MgSO_4$, the difficultly-soluble phosphates are converted during the high temperature treatment into $Mg_3(PO_4)_2$, which is readily usable by plants.

5. A process as claimed in Claim 1 and 2, characterised in that, by the addition of CaO and/or $Ca(OM)_2$ with the co-operation of sand residues which are contained in the sludge or clarifying sludge, calcium silicophosphates are produced, which are readily usable by plants.

6. A process as claimed in one of Claims 1 to 5, characterised in that the $Na_2CO_3$, CaO, $Ca(OH)_2$, MgO and/or $MgSO_4$ are added to the sludge or ash, in particular the clarifying sludge or clarifying sludge ash, before or during the high temperature treatment.

7. A process as claimed in one of Claims 1 to 6, characterised in that the high temperature treatment is effected in a rotary drum furnace, a rotary tube furnace, or a shelved furnace.

8. A process as claimed in one of Claims 1 to 6, characterised in that the high temperature treatment is carried out in a fluidized bed furnace.

9. A process as claimed in one of Claims 1 to 6, characterised in that the high temperature treatment is carried out in a muffle furnace or melting chamber furnace, that the clarifying sludge ash is melted and its treatment with the sodium compounds, calcium compounds and/or magnesium compounds, is effected in the melt.

10. A process as claimed in Claim 1 or 6, characterised in that the clarifying sludge ash and the $Na_2CO_3$, CaO, $Ca(OH)_2$, MgO and/or $MgSO_4$ are briquetted and the briquettes are subjected to the high temperature treatment by mixing with hot ironworks slag.

**Revendications**

1. Procédé pour la dissociation de schlamms ou de cendres, notamment de schlamms de clarification ou cendres de schlamms de clarification avec une fraction de composants d'engrais minéraux ou attaqués, notamment de composés phosphatés insolubles, caractérisé en ce que les schlamms ou cendres de schlamms en particulier les schlamms de clarification sont soumis à un traitement thermique à une haute température jusqu'à 1200°C, en présence d'un ou plusieurs $Na_2CO_2$, CaO, $Ca(OH)_2$, MgO et $MgSO_4$, tel que les phosphates difficilement solubles sont convertis en composés phosphatés solubles dans l'eau et/ou l'acide citrique, absorbables par les plantes.

2. Procédé suivant la revendication 1, caractérisé en ce que le traitement á hautes températures s'effectue à des températures comprises entre 600 et 1200°C, notamment à une température de 900°C.

3. Procédé suivant l'une des revendications 1 et 2, caractérisé en ce que les phosphates difficilement solubles de fer, de calcium et d'aluminium sont convertis, par le traitement à haute température et par l'addition de chaux, en Ca Na $PO_4$ absorbable par les plantes.

4. Procédé suivant l'une des revendications 1 et 2, caractérisé en ce que, par l'addition de MgO et/ou de $MgSO_4$, les phosphates difficilement solubles sont convertis, par le traitement à haute température, en $Mg_3(PO_4)_2$ absorbable par les plantes.

5. Procédé suivant l'une des revendications 1 et 2, caractérisé en ce que, par addition de CaO et/ou de Ca(OH)$_2$, et, par co-action des restes de sable contenus dans le schlamm et le schlamm de clarification, sont formés des silico-phosphates de calcium absorbables par les plantes.

6. Procédé suivant l'une quelconque des revendications 1 à 5, caractérisé en ce que, on ajoute aux schlamms ou aux cendres, notamment schlamms ou cendres de schlamms de clarification, avant ou pendant le traitement à haute température, Na$_2$CO$_3$, CaO, Ca (OH)$_2$ MgO et/ou MgSO$_4$.

7. Procédé suivant l'une quelconque des revendications 1 à 6, caractérisé en ce que le traitement à haute température est effectué dans un four à tambour rotatif, à tube rotatif ou à étages.

8. Procédé suivant l'une quelconque des revendications 1 à 6, caractérisé en ce que le traitement à haute température est effectué dans un four à couche fluidisée.

9. Procédé suivant l'une quelconque des revendications 1 à 6, caractérisé en ce que le traitement à haute température est effectué dans un four à moufle ou four à chambre de fusion, de telle sorte que les cendres de schlamm de clarification soient fondues et que le traitement avec les composés de sodium, calcium et/ou magnésium, s'effectue dans la masse fondue.

10. Procédé suivant l'une quelconque des revendications 1 à 6, caractérisé en ce que les cendres de schlamms et les composés Na$_2$ CO$_3$, CaO, Ca (OH)$_2$, MgO et/ou MgSO$_4$ sont compactés en briquettes, et celles-ci sont soumises au traitement à haute température, par mélange avec des scories d'installations sidérurgiques.

0 000 195